# EUROPEAN PATENT APPLICATION

(11) **EP 1 036 644 A1**
(43) Date of publication of application: **20.09.2000**
(21) Application number: 00200912.4
(22) Date of filing: 14.03.2000
(51) Int. Cl.: B29C 65/60, B23K 26/00

(54) **Method and apparatus for deforming a thermoplastic projection using laser energy**

(30) Priority: 16.03.1999 US 270563
(71) Applicant: EMERSON ELECTRIC CO., St. Louis Missouri 63136 (US)
(72) Inventor: Grewell, David A., Waterbury, CT 06708 (US); Piasecki, Jon C., Clarkston, MI 48346 (US)
(74) Representative: Weydert, Robert

(57) **Abstract**

The method of deforming a thermoplastic projection (20) of a workpiece (14) comprises coupling laser energy to the projection (20) for heating the projection and rendering it deformable, and while the projection is deformable, deforming it to a predetermined shape. The apparatus comprises a support (12) for supporting a workpiece (14); a source of laser energy (24) disposed for causing a laser beam (26) from said source to shine upon the projection (20) of the workpiece (14) disposed on said support (12) for heating the projection (20) and rendering it deformable; a die (30) having a shaping surface (32) disposed for engaging and deforming said projection (20) when said projection (20) is rendered deformable, and motion means (34) coupled to said die (30) for providing during a time interval forced engagement between said shaping surface (32) and said projection (20) for deforming said projection.

## Description

### BACKGROUND OF THE INVENTION

This invention relates to a method and apparatus for deforming a portion of a workpiece, particularly a thermoplastic projection, by heating the projection to a temperature at which the projection is rendered deformable and then deforming the projection by forced engagement with the shaping surface of a die. This deforming method is used in connection with the so-called staking process for securing two parts, one of which is made of thermoplastic material, to one another.

U.S. Patents No. 3,367,809, 3,499,808 and 4,859,378 show a method and apparatus wherein the front surface of an ultrasonically resonant horn is brought into forced contact with an upstanding thermoplastic projection, such as a solid cylindrical stud. The dissipation of vibratory energy by the stud results in a heating and softening of the thermoplastic stud material and responsive to the forced engagement between the horn and the stud, the stud is deformed as determined by the shape of the engaging surface of the horn. Using this process, two superposed parts can be secured to one another in a rivet-like manner in and easy, inexpensive and relatively fast procedure.

While this process has found wide acceptance, recent work has evidenced that the described process manifests certain failings. When the plastic material includes crystalline material or filler material, particulate matter is generated which is dispersed and deposited upon electronic parts and assemblies. Such contamination is detrimental to the reliable functioning of delicate control devices as are associated, for instance, with automobile air bag assemblies, signal horns, etc.

An alternative method for assembling such parts involves the use of hot air for causing the thermoplastic projection to attain its deformable state and then moving the part or parts for contact with a forming die where the required deformation of the projection is effected. The hot air process is relatively slow and the hot air also heats the area surrounding the projection. In addition, the heated area remains hot for an extended period of time.

The methods and apparatus disclosed hereafter overcome the disadvantages described above by using laser energy for heating the thermoplastic projection to render it deformable. The laser energy, most suitably, is provided by one or more laser diodes shining a laser beam upon the projection. In one of the arrangements, the projection is heated by laser energy during a first time interval and then engaged by a die for deforming the projection during a second time interval. If the source of laser energy and the die are disposed at a stationary location, the workpiece having the projection undergoes movement between these time intervals, i.e. being moved from exposure to the laser source to the die position. Alternatively, the workpiece can be stationary and the laser beam and die are moved with respect to the projection.

In an alternative embodiment of this invention,a single time interval is used for heating the projection while the die is in forced engagement with the projection, thereby deforming the projection as the projection, or portions thereof, becomes deformable. In order to make this latter process and apparatus possible, the die and its shaping surface engaging the projection comprise laser light transmitting material, such as fused silica. The laser beam is coupled to the die, passes through the die and exits from the shaping surface of the die for heating the projection while simultaneously the shaping surface is in forced contact with the projection to effect deformation thereof as the material of the projection softens and becomes deformable. This latter procedure, of course, reduces the processing time to a minimum.

The processes described above, using a laser beam as a source of heat, produce clean assemblies of the type required by the industry.

One of the principal objects of this invention is, therefore, the provision of a new and improved method and apparatus for deforming thermoplastic material.

Another important object of this invention is the provision of a new and improved method and apparatus for deforming and shaping a thermoplastic projection of a workpiece as a part of a fastening or staking process.

Another important object of this invention is the provision of a clean method for deforming thermoplastic material, particularly a projection of a workpiece, causing substantially no particulate matter which could contaminate surrounding parts.

Another important object of this invention is the provision of a laser beam arranged for heating a thermoplastic projection of a workpiece followed by contacting the projection with the shaping surface of a die to effect deformation of the projection.

A further object of this invention is the provision of a die having a shaping surface and a beam of laser light emanating from such shaping surface.

A still further object of this invention is the provision of a forming die having coupled thereto a laser beam, the die being made of laser light transmitting material for causing a beam of laser light to traverse at least a portion of the die and exit at a shaping surface of the die for heating a thermoplastic projection with which the shaping surface is in forced contact.

A further and other object of this invention is the provision of a method and apparatus for staking two workpieces to one another in a clean and fast process using a beam of laser light for heating a thermoplastic stud extending from one of the workpieces and deforming the stud with the shaping surface of a die whereby the beam heats the stud by traversing the die.

A further and still other important object of this invention is the provision of a method and apparatus for deforming a thermoplastic projection of a workpiece using a laser beam emanating from a shaping surface of a die in forced contact with the projection to simultaneously achieve heating and deformation of the projection.

Further and still other important objects of this invention will become more clearly apparent from the following description when taken in conjunction with the accompanying drawings.

### BRIEF DESCRIPTION OF THE SEVERAL VIEWS OF THE DRAWING

FIG. 1 is an elevational view, partly in section, of a first embodiment of an apparatus for deforming a thermoplastic projection in accordance with the present invention;
FIG. 2 is an elevational view, partly in section, showing the deformation step of the projection;
FIG. 3 is a sectional view of two workpieces fastened together resulting from the deformation of the thermoplastic projection;
FIG. 4 is a schematic block diagram of the control means for operating an apparatus per FIG. 1;
FIG. 5 is an elevational view, partly in section, showing a second and alternative arrangement for deforming a thermoplastic projection in accordance with the present invention;
FIG. 6 is an elevational view similar to FIG. 5, the die with its shaping surface being in deforming contact with the projection;
FIG. 7 is a sectional view of the deformed projection securing two workpieces together and the die head in the raised position;
FIG. 8 is an elevational view, partly in section, of a die head construction for directing a plurality of laser beams on a projection for heating the projection;
FIG. 9 is a view along section lines 9 - 9 in FIG. 8;
FIG. 10 is an enlarged view of certain parts of FIG. 8;
FIG. 11 is an elevational view, partly in section, of a further alternative embodiment of a die head in accordance with the present invention;
FIG. 12 is a cross-sectional view taken along lines 12 - 12 in FIG. 11;
FIG. 13 is an elevational view, partly in section, of a rotatable support for the forming die shown in FIG. 11;
FIG. 14 is an exploded view, in section, of the die support, and
FIG. 15 is a perspective view of a modified die support suitable for the present invention.

### DETAILED DESCRIPTION OF THE INVENTION

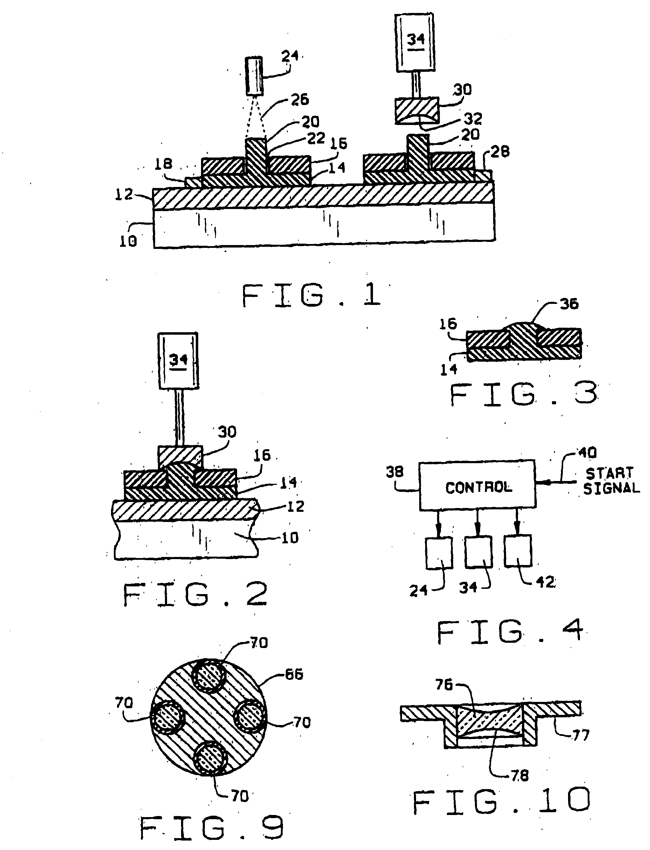

Referring now to the figures and FIGS. 1 to 4 in particular, numeral 10 designates a base which supports a fixture plate 12. The plate 12 supports, in turn, a pair of superposed plate shaped workpieces 14 and 16 resting against a stop 18 mounted upon the fixture plate. The lower workpiece 14, made of thermoplastic material, is molded to include an upstanding thermoplastic projection 20 which passes through the aperture 22 in the upper workpiece 16 and extends above the upper surface of the workpiece 16. In a typical example, the projection 20 comprises a solid, cylindrical thermoplastic stud. For securing the workpieces 14 and 16 to one another, the upper end of the stud is deformed by reshaping it to a head. Of course, other forms of reshaping may be considered, such as flattening the upper stud portion and filling a recess in the workpiece 16 with the displaced material, all as is well understood by those skilled in the art.

In the present embodiment of the invention, a two-step deforming process is used. During a first time interval, a source of laser energy 24, such as a laser diode, is energized to provide a laser beam 26 shining upon the projection 20 for causing the projection to become heated, thereby attaining a temperature at which the projection is rendered deformable.

When the projection has attained its deformable state, most suitably established by tests, the workpieces 14 and 16 are moved toward the right as seen in FIG. 1, against the stop 28, at which position the heated projection 20 becomes deformed during the ensuing second time interval. There is provided a metal forming die 30 having a concave shaping surface 32 for forcibly engaging the upper end of the projection 20 and reshaping it responsive to the contour of the shaping surface 32. The die 30 is coupled for reciprocating vertical motion to a linear motion device 34, such as a pneumatic actuator. During this second time interval, the actuator 34 moves the die toward the projection and urges the shaping surface 32 into forced contact with the projection 20, thereby deforming and reshaping the upper end of the stud as seen in FIG. 2. The die is maintained in contact with the deformed and reshaped stud for a brief dwell period during which the reshaped thermoplastic material of the projection cools and solidifies. Upon terminating the dwell period, the die is restored to its lifted position and the assembly of the workpieces 14 and 16 has an appearance as is illustrated in FIG. 3. The reshaped upper end of the projection is indicated by numeral 36.

It will be apparent that instead of moving the workpieces for providing sequential exposure of the projection to the heat source 24 and to the forming die 30, in an alternative embodiment the workpieces may be retained stationary and the laser source and the die are moved into communicating position with the workpiece projection.

In another arrangement, most suitable for production, the base 10 comprises a rotatable indexing table. The workpieces 14 and 16 are placed on the indexing table and are rotated first for bringing the projection into communication with the laser beam 26 and subsequently for contact by the forming die 30. Still other motion arrangements are well within the known art.

FIG. 4 is a block diagram of the control means for operating the embodiments described above. The control means 38 is rendered operative responsive to the receipt of a start signal along conductor 40. During the first time interval, the control means 38 renders the laser source 24 operative for heating the projection. During the subsequent time interval, the control means causes the motion means 34 to become active for providing forced engagement between the die 30 and the projection 20 for causing deformation of the projection, for retaining the die in contact with the deformed projection 36 during the dwell time, and thereafter breaking the forced contact and returning the die to its raised home position. The control means also actuates a motive means 42 as required, for instance a motor which effects indexing of an indexing table, or a motive means providing relative motion between the workpieces, the laser source 24 and the position of the die 30 when the fixture plate 12 comprises a slide table, or when the laser source 24 and actuator 34 are mounted on a sliding or rotatable support structure.

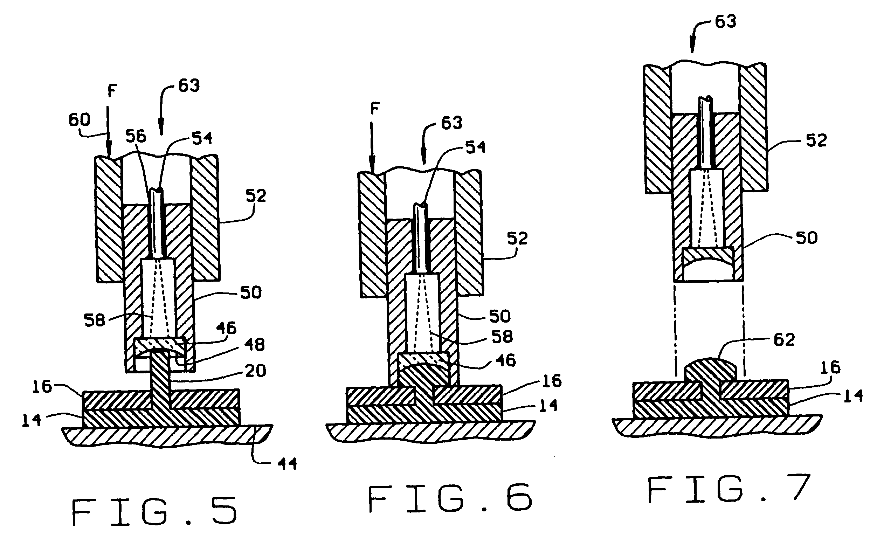

FIGS. 5, 6 and 7 show an alternative embodiment for deforming the projection extending from the workpiece 14, the deforming being accomplished in a single time interval. Both workpieces 14 and 16 are supported on a stationary support 44. A die head 63 includes a forming die 46 having a concave shaping surface 48 disposed in a tubular sleeve 50, which is supported in a housing 52. In this embodiment, the die 46 and its shaping surface 48 comprise laser light transmitting material, such as fused silica. The die 46 can be a clear, plano-concave lens available, for instance, from Opto Sigma Co., Santa Ana, CA, part No. D10./FI-9.700. The lens, serving as the die, is secured by cement within the cylindrical recess in the lower portion of the sleeve 50, and the sleeve is secured within the housing 52 by radially disposed set screws, not shown. Laser light from a suitable source, such as a laser diode, is brought to the die head 63 by an optical fiber conductor 54, which is retained within a cylindrical bore 56 of the sleeve 50. The fiber conductor also is retained in place by a suitable set screw, not shown, extending radially from the sleeve 50 toward the conductor 54. As the fiber conductor ends, a laser beam 58 exits, traverses the centrally located bore in the sleeve 50, passes through the die 46 and exits at the shaping surface 48 for heating the projection 20. Also acting upon the head 63 is a force means, such as an actuator 34, represented by arrow 60 and letter F, coupled to the housing 52.

For achieving deformation of the thermoplastic projection 20, the die head 63 is positioned to cause forced contact between the shaping surface 48 and the projection 20 as seen in FIG. 5. Simultaneously, the laser source is energized for causing the laser beam 58 to shine upon the projection 20. Therefore, as the projection is rendered deformable, deformation occurs concomitantly due to the prevailing forced contact between the shaping surface and the projection. The completed deformation is shown in FIG. 6. As before, a dwell period is provided during which the laser beam is inoperative, thus permitting the deformed projection to cool and to solidify. The die head then is lifted from the workpiece as shown in FIG. 7, which figure also illustrates the workpieces 14 and 16 secured to one another as a result of the deformed projection portion 62.

It will be noted that in the embodiment per FIGS. 5 to 7 heating and deformation occur substantially simultaneously and in a single time interval. Only a single reciprocating motion of the die head is required. As deformation occurs in a single stage, a significant reduction of the time required for deforming the projection is achieved.

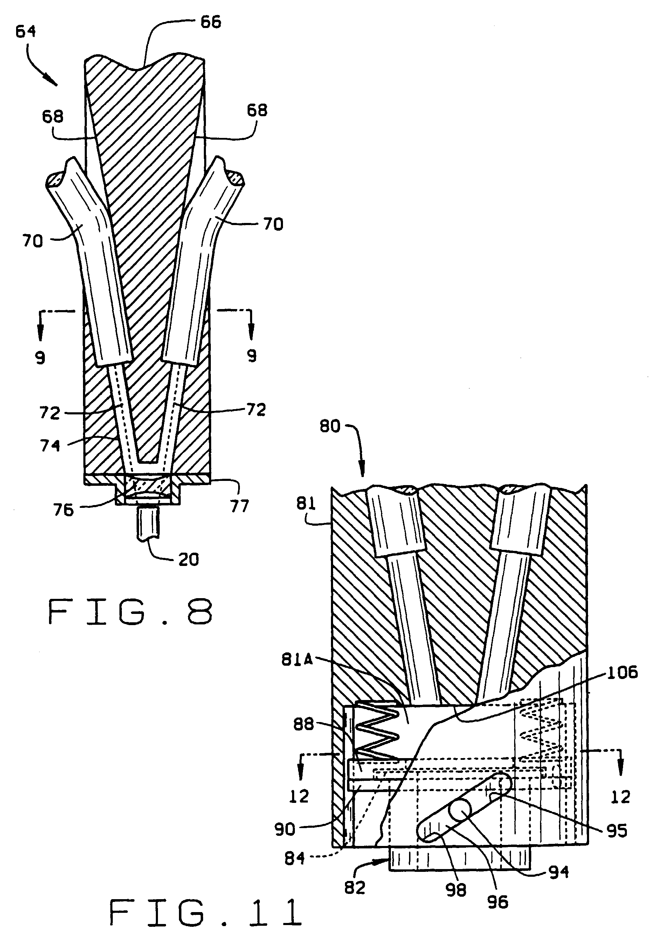

Referring to FIGS. 8 to 10, a further alternative embodiment of the die head is shown. The die head 64 includes a metal bar 66 having four inclined bores 68, each bore retaining a respective optical fiber conductor 70 coupled to an associated laser source, such as a commercial laser diode (not shown). The laser beams 72, emanating from the end of each fiber conductor, traverse the respective bore 74 of the bar 66, pass through the tranparent die 76 and shaping surface 78 to shine upon the projection 20. The die, a clear, transparent lens, is retained by cement in a flange 77 secured to the underside of the bar 66. Although in FIGS. 8 and 9, four laser beams are shown, it will be apparent that a larger or a smaller quantity of laser beams may be provided. There are several advantages to using a plurality of beams. Instead of an expensive, high power laser diode, several less expensive, low power diodes can be used to provide a greater amount of heat. With a plurality of beams a more uniform heat distribution can be achieved. Also, the beams can be directed not only upon the top surface of the projection, but also on the upper edge and side surface of the projection. Thus, a plurality of beams provides for greater flexibility and contributes to a faster processing cycle.

FIGS. 11 to 15 disclose a further embodiment of a die head constructed to overcome a bonding condition which may arise in the single time interval operation, namely adherence of thermoplastic material to the die. Tests conducted have shown that soft thermoplastic material, upon cooling, may remain adhered to the shaping surface of the die. Adhered material interferes with the laser light transmission of the lens and such material may increase during succeeding cycles. Further, adhered material causes poorly shaped projections. The problem described can be remedied by subjecting the die, when lifting from the deformed projection, to a twisting or rotating motion while still in contact with the solidified projection. This twisting motion causes the die to break free from the projection in a clean manner, leaving the projection unimpaired and leaving the die and its shaping surface free of thermoplastic material or residue.

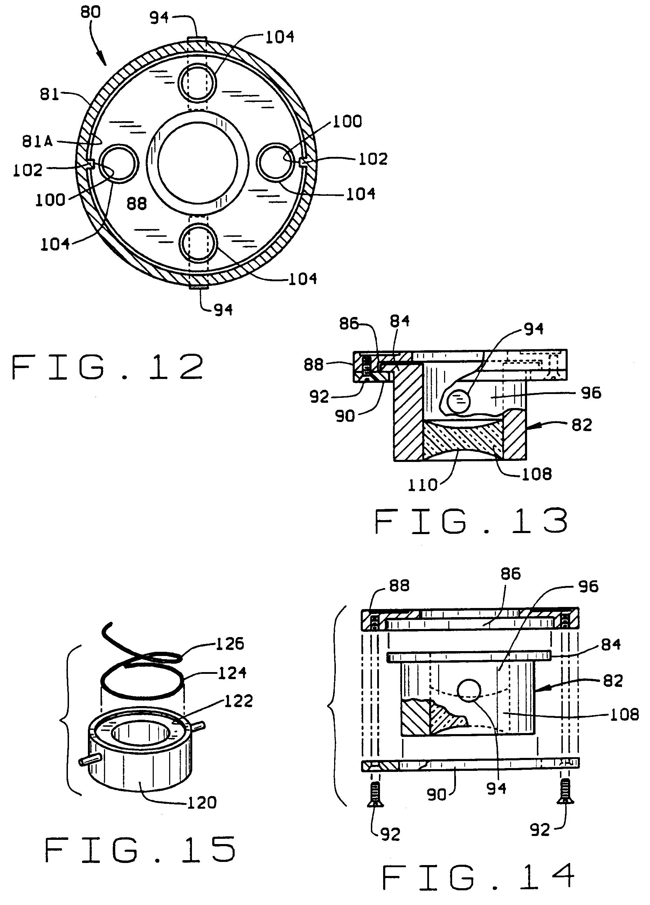

As seen in FIGS. 11 to 14, the die head 80 comprises a housing 81 having a hollow lower portion 81A which mounts therein a die support 82, rotatable with respect to the workpiece projection after completion of the deforming operation. The die support 82 is provided with a flange 84 at its upper end, which is received for rotation in a recess 86 of a plate 88, in which the support 82 is retained by a ring 90 secured by screws 92, as best seen in FIGS. 13 and 14. A follower pin 94 projects from the sidewall 96 of the die support 82 into a cam slot 98 with which the follower pin 94 cooperates for rotating the die support 82 in response to vertical motion of the housing 81. A second follower pin 94 and cam slot, in opposed position, may be provided on the die support 82 to attain a balanced condition.

As will be noted in FIG. 12, the plate 88 is provided with opposed slots 100 to slidably receive therein opposed ribs 102 for vertical motion within the lower and hollow housing portion 81A. This arrangement is to prevent rotation of the plate 88 which carries four spaced helical springs 104 biased between the plate 88 and the top 106 of the lower housing portion 81A.

During the deformation stage, the downward force exerted upon the die head 80 for establishing forced contact between the forming die 108 and its shaping surface 110 with the projection to be deformed, causes downward motion of the housing 81 and compression of the springs 104.

Upon completion of the dwell period, the die head 80 is raised, causing a lifting of the housing 81, thus allowing the springs 104 to expand, from their previously compressed state, and forcing the die support 82 to move toward the lower end of the housing 81. As the lower side of the pin 94 rides down the lower incline 95 of the spiral slot 98, a rotating or twisting motion of the support 82 and die 108 occurs in the manner of a cam action, thereby breaking any adherence of thermoplastic material with the shaping surface 110 of the die 108. Rotating motion of the die support 82 stops when the pin 94 reaches the end of slot 98 in which the pin rides. A rotation in the order of ninety degrees appears adequate.

It will be noted that the plate 88 and the die support 82 include centrally aligned apertures to permit the passage of the laser beams to the die 108, a lens, secured by cement within the central cavity of the support 82. The die, as shown, comprises a double concave lens of the material indicated above.

An alternative mechanism suited for rotating the die relative to the deformed projection when breaking the forced engagement between the die and projection is shown in FIG. 15. The die support 120 includes a small undercut 122 to receive the flattened end 124 of a single helical spring 126, replacing the four springs 104 in FIGS. 11 to 14. The free end (not shown) of the spring is biased against the inner top surface 106 of the hollow portion 81A of the housing 81, see FIG. 11. The die support 120 operates in the same manner as described before, i.e., as the forced engagement is broken and the force reduced upon lifting the die head, the die, while still in contact with the deformed projection, undergoes rotation against the projection for achieveing a clean break from the projection.

The die head construction per FIG. 11 includes, of course, the multiple laser beam arrangement shown and described in connection with FIG. 8.

While there have been described and illustrated certain preferred embodiments of the present invention and particular changes and modifications have been indicated, it will be apparent to those skilled in the art, that various further changes and modifications may be made without departing from the broad principle of this invention, which shall be limited only by the scope of the appended claims.

## Claims

1. The method of deforming a thermoplastic projection of a workpiece characterized by:
coupling laser energy to the projection for heating the projection and rendering it deformable, and
while the projection is deformable, deforming it to a predetermined shape.

2. The method of deforming a thermoplastic projection of a workpiece as set forth in claim 1 further comprising:
urging a die having a shaping surface into contact with said projection for deforming said projection to a shape determined by said shaping surface.

3. The method of deforming a thermoplastic projection of a workpiece as set forth in claim 2 further comprising:
terminating said laser energy upon deformation of said projection,
maintaining during a dwell period contact between said die and projection for causing said deformed projection to cool and solidify, and
then breaking contact between said die and projection.

4. The method of deforming a thermoplastic projection of a workpiece as set forth in claim 2, and heating said projection during a first time interval and deforming said projection during a succeeding second time interval.

5. An apparatus for deforming a thermoplastic projection of a workpiece comprising:
a support for supporting a workpiece;
a source of laser energy disposed for causing a laser beam from said source to shine upon a projection of the workpiece disposed on said support for heating the projection and rendering it deformable;
a die having a shaping surface disposed for engaging and deforming said projection when said projection is rendered deformable, and
motion means coupled to said die for providing during a time interval forced engagement between said shaping surface and said projection for deforming said projection.

6. An apparatus for deforming a thermoplastic projection of a workpiece as set forth in claim 5 further comprising a controller for causing said source of laser energy to be operative during a first time interval and for causing said motion means to provide said forced engagement during a succeeding second time interval.

7. An apparatus for deforming a thermoplastic projection of a workpiece as set forth in claim 6, said controller terminating said second time interval when said deformed projection has cooled and substantially has solidified.

8. An apparatus for deforming a thermoplastic projection of a workpiece as set forth in claim 5, said die being an optical lens and said shaping surface being concave.

9. An apparatus for deforming a thermoplastic projection of a workpiece as set forth in claim 7, and a controller coupled for causing said force means to provide said forced contact when said source causes said laser beam to heat said projection.

10. An apparatus for deforming a thermoplastic projection of a workpiece as set forth in claim 5, said source of laser light providing a single laser beam.

11. An apparatus for deforming a thermoplastic projection of a workpiece as set forth in claim 5, said source of laser light providing a plurality of laser beams directed upon said projection.
